# EUROPEAN PATENT APPLICATION

(11) **EP 2 393 001 A2**
(43) Date of publication of application: **07.12.2011**
(21) Application number: 11168424.7
(22) Date of filing: 01.06.2011
(51) Int. Cl.: G06F 3/048

(54) **System and method for the operation of a touch screen**

(30) Priority: 02.06.2010 US 791924
(71) Applicant: Rockwell Automation Technologies, Inc., Mayfield Heights, OH 44124 (US)
(72) Inventor: Nguyen, Thong T., Milwaukee, WI Wisconsin 53228 (US); Scott, Steven J., Oconomowoc, WI Wisconsin 53066 (US); Tschendel, Christian, 16321 Bernau bei Berlin (DE)
(74) Representative: Grünecker, Kinkeldey, Stockmair & Schwanhäusser

(57) **Abstract**

A method of operating a human-machine interface system is provided. The method includes displaying a plurality of objects on a display system, each of the plurality of objects displayed according to object parameters, and receiving touch information corresponding to a plurality of touches on the display system. The method also includes processing the touch information to identify which object of the plurality of objects was touched, and upon identifying the first object that was touched, processing the touch information to identify a first gesture represented by the plurality of touches. The method further includes upon identifying the first gesture, determining a first command based on the first gesture, generating first new parameters for the object based on the first command, and displaying at least the first object that was touched according to the first new parameters for the object.

## Description

### TECHNICAL BACKGROUND

Touch screens are often used within industrial automation systems to display machine status and controls, and to control the machines based on user gestures on the touch screen. These gestures may take any of a wide variety of formats and functions. For example, gestures may include moving, activating, deactivating, and rotating control objects corresponding to machine controls.

Example touch screen systems process user touches on the touch screen to determine which of the variety of gestures has occurred, then determine which control object the gesture was performed upon. From this information the control object is modified by a new set of parameters (such as size, location, and the like) according to the user gestures.

### OVERVIEW

In an embodiment, a method of operating a human-machine interface system is provided. The method includes displaying a plurality of objects on a display system, each of the plurality of objects displayed according to object parameters, and receiving touch information corresponding to a plurality of touches on the display system. The method also includes processing the touch information to identify which object of the plurality of objects was touched, and upon identifying the first object that was touched, processing the touch information to identify a first gesture represented by the plurality of touches. The method further includes upon identifying the first gesture, determining a first command based on the first gesture, generating first new parameters for the object based on the first command, and displaying at least the first object that was touched according to the first new parameters for the object.

In another embodiment, a processing device for the operation of a touch screen displaying a plurality of objects is provided. Each of the plurality of objects is displayed according to object parameters. The processing device includes a gesture engine coupled to the touch screen, configured to receive user inputs and determine a set of points touched based on the user inputs, a view engine coupled to the touch screen and the gesture engine, configured to receive a set of points from the gesture engine and determine an identity of an object touched from the plurality of objects based on the set of points touched, and an object engine coupled to the gesture engine and the view engine.

The object engine is configured to receive the identity of the object touched from the view engine, query the gesture engine for a command based on the user inputs and the object touched, receive a command from the gesture engine, and process the object touched and the command to determine a new set of parameters for the object. The view engine is also configured to receive the new set of parameters from the object engine, and to display the object configured by the new set of parameters on the touch screen.

In a further embodiment, a method for the operation of a touch screen is provided. The method includes displaying a plurality of objects on the touch screen, each of the plurality of objects displayed according to object parameters, and receiving user inputs from the touch screen at a gesture engine. The method also includes determining a set of points touched by the user inputs in the gesture engine, and processing the set of points touched in a view engine to determine an identity of an object touched from the plurality of objects. The method further includes receiving the identity of the object touched at an object engine, and transmitting the identity of the object touched to the gesture engine.

The method also includes determining a gesture in the gesture engine based on the user inputs and the object touched, determining a command in the gesture engine based on the gesture, receiving the command at the object engine, processing the command and the object touched in the object engine to determine a new set of parameters for the object, and displaying the object configured by the new set of parameters on the touch screen.

### BRIEF DESCRIPTION OF THE DRAWINGS

Figure 1 illustrates an industrial automation system.

Figure 2 illustrates a method of operating a display system.

Figure 3 illustrates a human-machine interface (HMI) system configured to operate a display system within the HMI system.

Figure 4 illustrates interactions within a HMI system configured to operate a display system.

Figure 5 illustrates a method of operating a touch screen.

Figures 6A and 6B illustrate a display system.

Figure 7 illustrates an industrial automation system.

### DETAILED DESCRIPTION

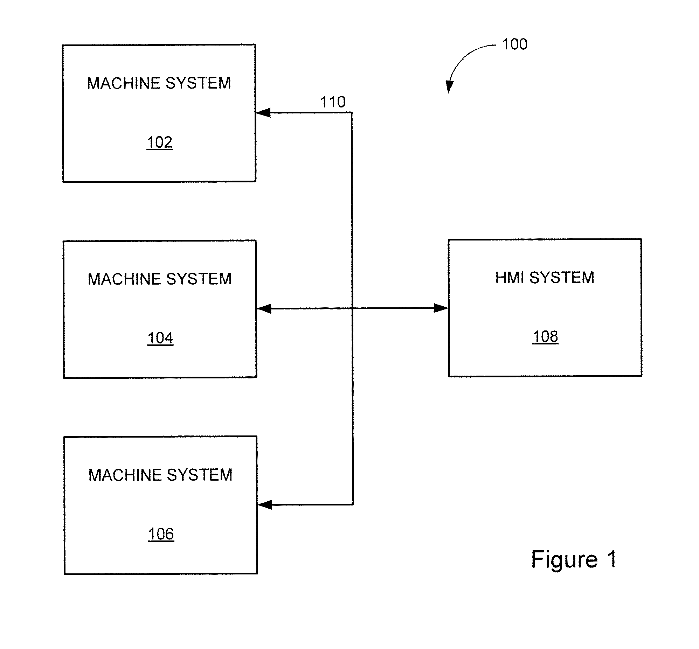

Figure 1 illustrates industrial automation system 100. Industrial automation system 100 includes three machine systems 102, 104, and 106 along with human-machine interface (HMI) system 108 coupled with the machine systems through link 110. In an example, machine systems 102, 104, and 106 are machines within an industrial automation environment configured to be controlled via HMI system 108. In some examples, multiple HMI systems may be coupled with the same, or a similar, set of machine systems. HMI system 108 includes a display system such as a touch screen for the display of machine data and the control of machine systems 102, 104, and 106.

In an example, HMI system 108 includes a processor configured to display machine data on a touch screen, and to receive user inputs through the touch screen. HMI system 108 interprets the user inputs and adjusts the parameters of machine systems 102, 104, and 106 accordingly.

Link 110 may use any of a variety of communication media, such as air, metal, optical fiber, or any other signal propagation path, including combinations thereof. Also, the link may use any of a variety of communication protocols, such as internet, telephony, optical networking, wireless communication, wireless fidelity, code division multiple access, worldwide interoperability for microwave access, or any other communication protocols and formats, including combinations thereof. Further, the link could be a direct link or it might include various intermediate components, systems, and networks.

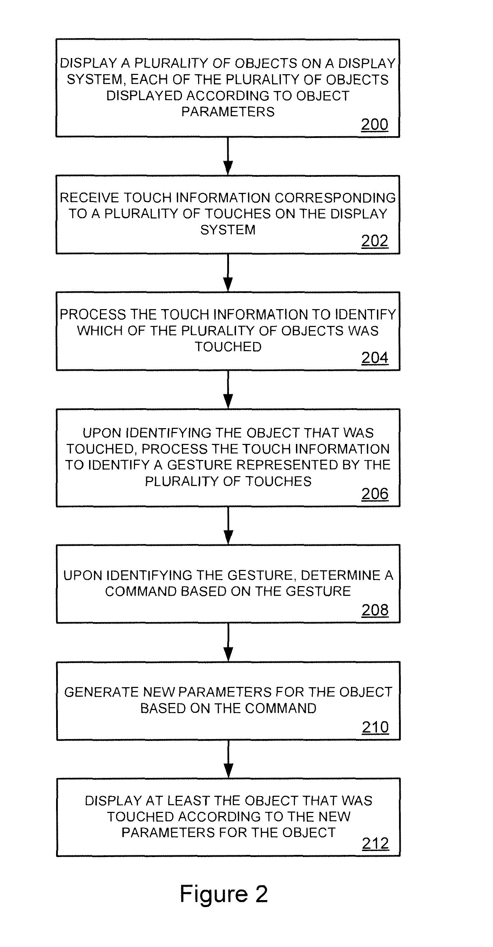

Figure 2 illustrates a method of operating a human-machine interface (HMI) system, such as HMI system 108 from Figure 1. In an example, a plurality of objects is displayed on a display system (operation 200). Each of the plurality of objects is displayed according to object parameters. Touch information corresponding to a plurality of touches on the display system is received (operation 202). The touch information may also include the order in which the points were touched, along with the set of points that were touched within an object.

The touch information is processed to identify which of the plurality of objects was touched (operation 204). If no object was touched the method ends without processing the touch information to identify a gesture. In other examples, when no object is touched, the method continues, and applies the touch information to all of the objects shown on the display system. Upon identifying the object that was touched, the touch information is processed to identify a gesture represented by the plurality of touches (operation 206).

Upon identifying the gesture, a command is determined based on the gesture (operation 208). New parameters for the object are generated based on the command (operation 210). At least the object that was touched is then displayed according to the new parameters for the object (operation 212). These operations may take place in HMI system 108 which also includes the display system. In other examples these operations may take place in a computer system coupled to the display system. In such an example, the computer system may be located apart from the display system and may be coupled to the display system through a network.

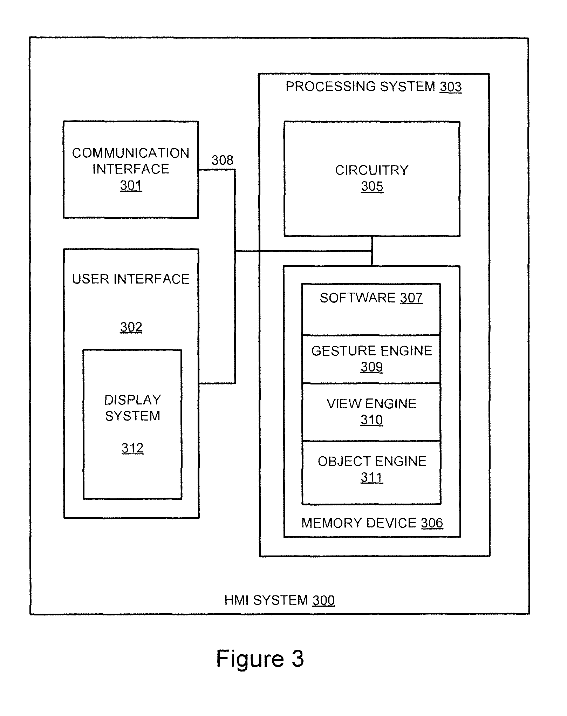

Figure 3 illustrates HMI system 300 configured to operate display system 312 within HMI system 300. HMI system 300 is a detailed example of human-machine interface (HMI) system 108 from Figure 1, although HMI system 108 may use alternative configurations. HMI system 300 comprises communication interface 301, user interface 302, processing system 303, and display system 312. Processing system 303 is linked to communication interface 301 and user interface 302 through bus 308. User interface 302 includes display system 312. Processing system 303 includes processing circuitry 305 and memory device 306 that stores operating software 307. Operating software 307 includes gesture engine 309, view engine 310, and object engine 311. In an example, gesture engine 309, view engine 310 and object engine 311 are configured to perform the operations illustrated in Figure 2.

Communication interface 301 comprises components that communicate over communication links, such as network cards, ports, RF transceivers, processing circuitry and software, or some other communication devices. Communication interface 301 may be configured to communicate over metallic, wireless, or optical links. Communication interface 301 may be configured to use TDM, IP, Ethernet, optical networking, wireless protocols, communication signaling, or some other communication format- including combinations thereof. In an example, communication interface 301 may be configured to communicate with a plurality of machine systems, such as machine systems 102, 104, and 106 illustrated in Figure 1.

User interface 302 includes components that interact with a user. These components may include a keyboard, display system, mouse, touch pad, or some other user input/output apparatus. In this example user interface 302 includes display system 312. In an example, display system 312 is a touch screen display configured to receive touch data and to display graphical data. Touch screens may be responsive to resistive or capacitive changes.

Processing circuitry 305 comprises microprocessor and other circuitry that retrieves and executes operating software 307 from memory device 306. Memory device 306 comprises a disk drive, flash drive, data storage circuitry, or some other memory apparatus. Operating software 307 comprises computer programs, firmware, or some other form of machine-readable processing instructions. Operating software 307 may include an operating system, utilities, drivers, network interfaces, applications, or some other type of software. In this example, operating software 307 includes gesture engine 309, view engine 310, and object engine 311. In an example, gesture engine 309, view engine 310 and object engine 311 are configured to control computer system 300 to perform the operations illustrated in Figure 2.

When executed by circuitry 305, operating software 307 directs processing system 303 to operate HMI system 300 as described herein. In particular, operating software 307 directs processing system 303 to display a plurality of objects on display system 312. Each of the plurality of objects is displayed according to object parameters. Processing system 303 receives touch information corresponding to a plurality of touches on display system 312. Processing system 303 processes the touch information to identify which of the plurality of objects was touched. If no object is touched, the method ends without requiring the gesture to be processed. Thus gestures that do not operate on objects are ignored without processing the gesture itself. In other examples, when no object is touched, the input from the display system is applied to all of the objects shown on the display system.

Upon identifying the object that was touched, processing system 303 processes the touch information to identify a gesture represented by the plurality of touches. Upon identifying the gesture, processing system determines a command represented by the gesture. Processing system 303 generates new parameters for the object based on the command. Processing system 303 then displays at least the object that was touched according to the new parameters for the object on display system 312.

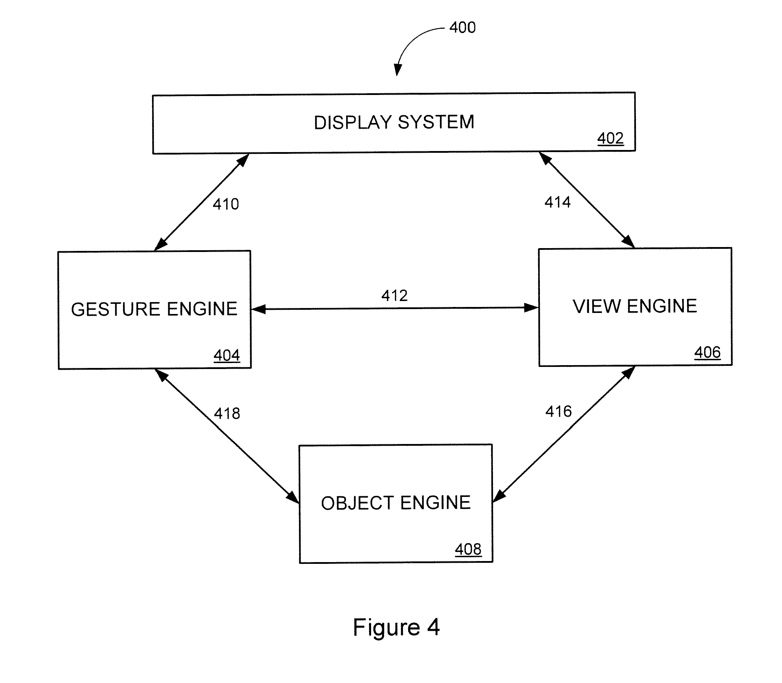

Figure 4 illustrates interactions within human-machine interface (HMI) system 400 configured to operate display system 402. This illustration is used to explain the interactions of the various software and hardware components within a HMI system, such as HMI system 108 from Figure 1 or HMI system 300 from Figure 3. In this example, HMI system 400 includes display system 402, gesture engine 404, view engine 406, and object engine 408. Display system 402 is coupled with gesture engine 404 through link 410. Gesture engine 404 is coupled with view engine 406 through link 412. View engine 406 is coupled with display system 402 through link 414, and with object engine 408 through link 416. Object engine 408 is coupled with gesture engine 404 through link 418.

Links 410, 412, 414, 416, and 418 may use any of a variety of communication media, such as air, metal, optical fiber, or any other signal propagation path, including combinations thereof. Also, the links may use any of a variety of communication protocols, such as internet, telephony, optical networking, wireless communication, wireless fidelity, code division multiple access, worldwide interoperability for microwave access, or any other communication protocols and formats, including combinations thereof. Further, the links could be direct links or they might include various intermediate components, systems, and networks.

In this example, display system 402 includes a touch screen. Display system 402 is configured to display a plurality of objects on the touch screen. Each of the plurality of objects is displayed according to object parameters. Gesture engine 404 receives user inputs from display system 402 through link 410. Gesture engine 404 is configured to determine a set of points touched by the user inputs. Gesture engine 404 transfers the set of points touched by the user inputs to view engine 406 through link 412.

View engine 406 is configured to process the set of points touched to determine an identity of an object touched from the plurality of objects. View engine 406 transfers the identity of the object touched, along with the points within the object that were touched, to object engine 408 through link 416. In some examples, view engine 406 includes a graphics driver configured to drive display system 402. Object engine 408 transfers the identity of the object touched to gesture engine 404 through link 418, In an alternate example, view engine 406 may transfer the identity of the object touched to gesture engine 404 through link 412. Gesture engine 404 determines a gesture based on the user inputs and the object touched. Gesture engine 404 determines a command based on the gesture. Gesture engine 404 transfers the command to object engine 408 through link 418.

Object engine 408 processes the command and the object touched to determine a new set of parameters for the object, Object engine 408 transfers the new set of parameters for the object to view engine 406 through link 416. View engine 406 then displays the object configured by the new set of parameters on display system 402.

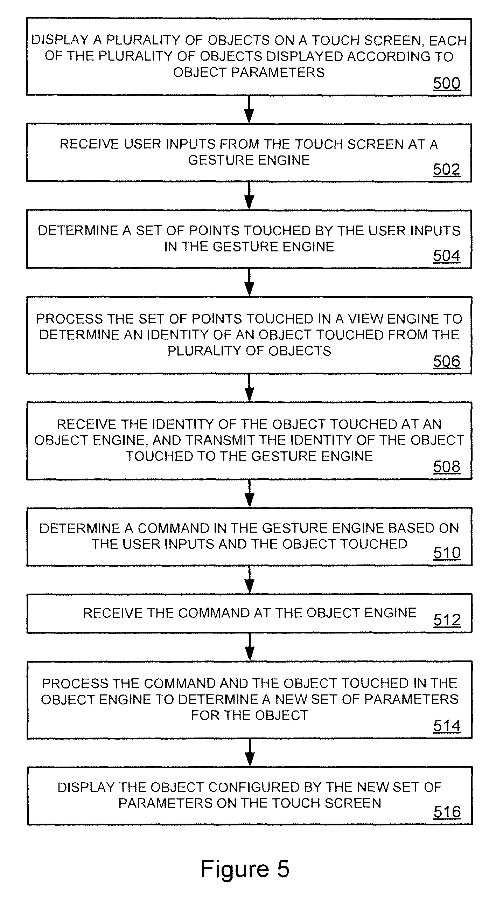

Figure 5 illustrates a method of operating a touch screen. In this example, the method illustrated in Figure 5 will be described with respect to HMI system 400. In this example, display system 402 includes a touch screen. Display system 402 is configured to display a plurality of objects on the touch screen (operation 500). Each of the plurality of objects is displayed according to object parameters. Gesture engine 404 receives user inputs from display system 402 through link 410 (operation 502). Gesture engine 404 is configured to determine a set of points touched by the user inputs (operation 504). Gesture engine 404 transfers the set of points touched by the user inputs to view engine 406 through link 412.

View engine 406 is configured to process the set of points touched to determine an identity of an object touched from the plurality of objects (operation 506). If no object was touched the method ends without processing the touch information do identify a gesture. In other examples, when no object is touched, the input from the display system is applied to all of the objects shown on the display system. View engine 406 transfers the identity of the object touched to object engine 408 through link 416 (operation 508). Object engine 408 transfers the identity of the object touched to gesture engine 404 through link 418 (operation 508). In an alternate example, view engine 406 may transfer the identity of the object touched to gesture engine 404 through link 412. Gesture engine 404 determines a command based on the user inputs and the object touched (operation 510). Gesture engine 404 transfers the command to object engine 408 through link 418 (operation 512).

Object engine 408 processes the command and the object touched to determine a new set of parameters for the object (operation 514). Object engine 408 transfers the new set of parameters for the object to view engine 406 through link 416. View engine 406 then displays the object configured by the new set of parameters on display system 402 (operation 516).

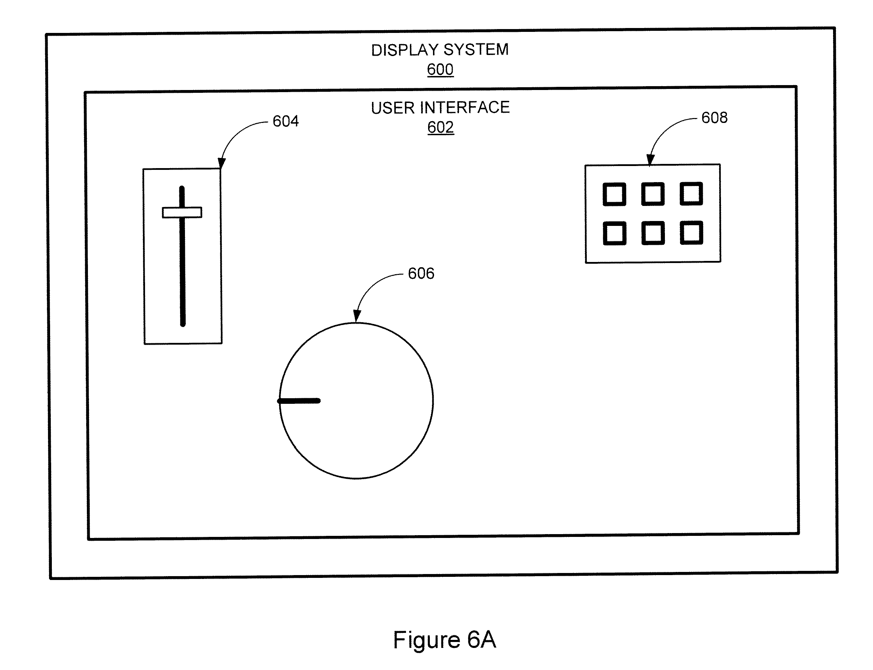

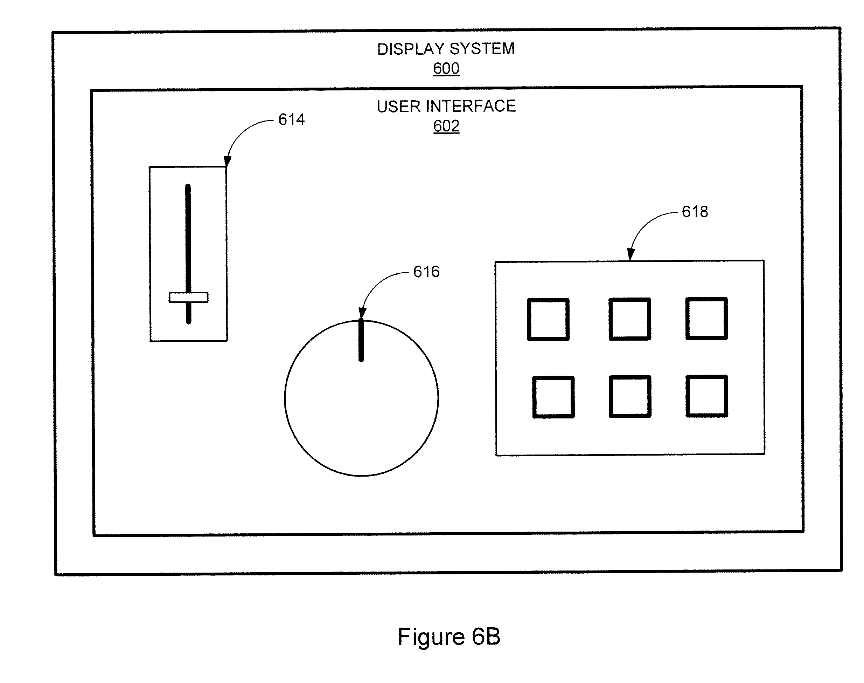

Figures 6A and 6B illustrate display system 600. These figures are used to illustrate the operation of a display system, such as display system 312 from Figure 3 or display system 402 from Figure 4. Display system 600 includes user interface 602. In an example, user interface 602 is a touch screen. In this example, user interface 602 displays three objects 604, 606, and 608. Object 604 is a slide bar controller, object 606 is a control knob, and object 608 is a set of control buttons. In this example, users may control the objects on user interface 602 by performing a series of gestures on the touch screen. Gestures may include reduce, enlarge, move, slide, rotate, transform, activate, deactivate, push, pull, or the like. There are a very wide variety of gestures which may be defined for use in this example display system. For example, a user may make a gesture to move down the slide bar controller from its current position, rotate the control knob, and move and enlarge the set of control buttons. These gestures are associated with commands such as on, off, automatic control, manual control, zoom, shrink, rotate, translate, move, open, close, scale, transform, activate, deactivate, delete, or the like.

Figure 6B illustrates the results of these example gestures and commands. In this example, object 614 is object 604 with new parameters, while object 616 is object 606 with its new parameters, and object 618 is object 608 with its new parameters. In this example, the new parameters for object 604 result in object 614 where the slide bar controller has been moved down. The new parameters for object 606 result in object 616 where the control knob has been rotated. The new parameters for object 608 result in object 618 where the set of control buttons has been moved and enlarged. These new parameters may be obtained through the use of systems and methods described above with respect to Figures 1 through 5.

Note that in this example two gestures are used to modify object 608. These gestures may happen simultaneously on multiple display systems displaying the same object for multiple users, or may happen sequentially on a single display system. Gestures may come from multiple users, or a single user. In this example, three objects have been modified at the same time. In other examples, one or any number of objects may be modified at the same time according to one or more user gestures on the touch screen.

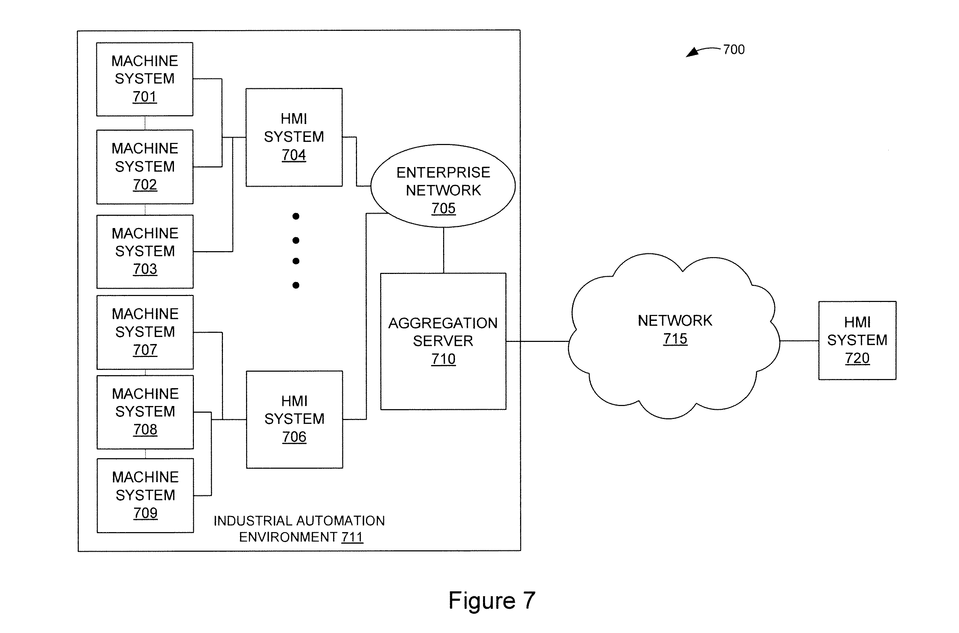

Figure 7 illustrates industrial automation system 700. Figure 7 is a block diagram illustrating industrial automation system 700 including touch screens configured for the display of graphical representations of industrial automation environments and control of the industrial automation environments. In this example industrial automation system 700 industrial automation environment 71 is connected to human-machine interface (HMI) device 720 through network 715. Industrial automation environment 711 contains multiple machine systems 701, 702, 703, 707, 708, and 709, multiple human-machine interface (HMI) systems 704, 706, and 720, an enterprise network 705, and an aggregation server 710.

Industrial automation environment 71 communicates with communication network 715 through aggregation server 710. Aggregation server 710 communicates with human-machine interface (HMI) systems 704 and 706 through enterprise network 705, and with HMI system 720 through network 715. Machine systems 701, 702, and 703 are coupled with HMI system 704, and machine systems 707, 708, and 709 are coupled with HMI system 706. In other examples, there may be any number of machine systems and HMI systems within industrial automation environment 711. In still other examples, the machine systems may be coupled directly with enterprise network 705 without passing through any HMI systems. Thus HMI system 720 has more direct access to the machine systems without having to go through any additional HMI systems.

HMl systems 704 and 706 receive machine data from the machine systems and create a graphical display representing their respective machine systems. This graphical display allows human operators to easily visualize the status of each machine system and to control the machine systems through the HMI systems. In many industrial automation environments, machine systems 701 through 709 may be coupled together in a variety of different configurations. These configurations may change as the industrial automation environment is modified for the production of different articles and as machine systems are updated, repaired, or replaced.

HMI systems 704 and 706 are configured to monitor machine systems 701 through 709 and to display machine status and controls as a set of objects on display systems within or attached to HMI systems 704 and 706. In some examples, the display systems are co-located with the machine systems. HMI system 720 is configured to display machine status and controls from any or all of machine systems 701 through 709. Aggregation server 710 is configured to generate a graphical representation of industrial automation environment 711 and to transmit the graphical representation to HM1 system 720 through network 715. In some embodiments, aggregation server 710 may be located outside of industrial automation environment 711. For example, it may exist on a data server within network 715, or may be independent and communicate to industrial automation environment 71 through another communication network. HMI system 720 is configured to display the graphical representation to a user and to respond to user commands received at a user interface within HMI system 720. HMI system 720 may be configured to both receive data from industrial automation environment 711 and also to send commands and data to industrial automation environment 711 based upon gestures received at a display system within or coupled to HMI system 720.

Further, in some embodiments, security measures may limit the data received by HMI system 720 from industrial automation environment 711 according to a security level of HMI system 720 or a user of HMI system 720. Likewise, security measures may limit the data and commands allowed to be sent by HMI system 720 to industrial automation environment 711 according to a security level of HMI system 720 or a user of HMI system 720.

Enterprise network 705 and network 715 may be any local or wide area network capable of transferring data from one computer system to another. For example, enterprise network 705 may be a local area network (LAN) with limited or no connections to machines outside of industrial automation environment 711, while network 715 may be the Internet with connections to machines and HMI systems throughout the world.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. As a result, the invention is not limited to the specific embodiments described above, but only by the following claims and their equivalents.

### The following is a list of further preferred embodiments of the invention:

Embodiment 1: A method of operating a human-machine interface system, the method comprising:
   displaying a plurality of objects on a display system, each of the plurality of objects displayed according to object parameters;
   receiving touch information corresponding to a plurality of touches on the display system;
   processing the touch information to identify which object of the plurality of objects was touched;
   upon identifying the first object that was touched, processing the touch information to identify a first gesture represented by the plurality of touches;
   upon identifying the first gesture, determining a first command based on the first gesture;
   generating first new parameters for the object based on the first command; and
   displaying at least the first object that was touched according to the first new parameters for the object.
Embodiment 2: The method of embodiment 1, wherein the touch information comprises points touched and an order in which the points were touched.
Embodiment 3: The method of embodiment 1, wherein the display system is a touch screen.
Embodiment 4: The method of embodiment 3, wherein the touch screen is responsive to resistive changes.
Embodiment 5: The method of embodiment 3, wherein the touch screen is responsive to capacitive changes.
Embodiment 6: The method of embodiment 1, wherein the first command is selected from a group of commands comprising: on, off, automatic control, manual control, zoom, shrink, rotate, translate, move, open, close, scale, transform, activate, deactivate, and delete.
Embodiment 7: The method of embodiment 1, wherein the first object is a graphical representation of a control for a machine, and the first gesture is used to automatically control the machine.
Embodiment 8: The method of embodiment 1, further comprising:
   receiving second touch information corresponding to a second plurality of touches on the display system;
   processing the second touch information to identify a second object of the plurality of objects that was touched;
   if the second object touched is the same as the first object touched:
      processing the second touch information to identify a second gesture represented by the second plurality of touches;
      upon identifying the second gesture, processing the second gesture to determine a second command;
      generating second new parameters for the object based on the second command, and incorporating the first new parameters for the object; and
      displaying at least the first object that was touched according to the second new parameters for the object.
Embodiment 9: A processing device for the operation of a touch screen displaying a plurality of objects, each of the plurality of objects displayed according to object parameters, comprising:
   a gesture engine coupled to the touch screen, configured to receive user inputs and determine a set of points touched based on the user inputs;
   a view engine coupled to the touch screen and the gesture engine, configured to receive a set of points from the gesture engine and determine an identity of an object touched from the plurality of objects based on the set of points touched; and
   an object engine coupled to the gesture engine and the view engine, configured to:
      receive the identity of the object touched from the view engine;
      query the gesture engine for a command based on the user inputs and the object touched;
      receive a command from the gesture engine; and
      process the object touched and the command to determine a new set of parameters for the object;
   wherein the view engine is also configured to receive the new set of parameters from the object engine, and to display the object configured by the new set of parameters on the touch screen.
Embodiment 10: The processing device of embodiment 9, wherein the user inputs comprise points touched and an order in which the points were touched.
Embodiment 11: The processing device of embodiment 9, wherein the touch screen is coupled to the gesture engine and the view engine through a network.
Embodiment 12: The processing device of embodiment 11, wherein the touch screen is coupled to the gesture engine and the view engine through the Internet.
Embodiment 13: The processing device of embodiment 9, wherein the command is selected from a group of commands comprising: on, off, automatic control, manual control, zoom, shrink, rotate, translate, move, open, close, scale, transform, activate, deactivate, and delete.
Embodiment 14: The processing device of embodiment 9, wherein the first object is a graphical representation of a control for a machine, and the gesture is used to automatically control the machine.
Embodiment 15: A method for the operation of a touch screen comprising:
   displaying a plurality of objects on the touch screen, each of the plurality of objects displayed according to object parameters;
   receiving user inputs from the touch screen at a gesture engine;
   determining a set of points touched by the user inputs in the gesture engine;
   processing the set of points touched in a view engine to determine an identity of an object touched from the plurality of objects;
   receiving the identity of the object touched at an object engine, and transmitting the identity of the object touched to the gesture engine;
   determining a gesture in the gesture engine based on the user inputs and the object touched;
   determining a command in the gesture engine based on the gesture;
   receiving the command at the object engine;
   processing the command and the object touched in the object engine to determine a new set of parameters for the object; and
   displaying the object configured by the new set of parameters on the touch screen.
Embodiment 16: The method of embodiment 15, wherein the user inputs comprise points touched and an order in which the points were touched.
Embodiment 17: The method of embodiment 15, wherein the touch screen is coupled to the gesture engine and the view engine through a network.
Embodiment 18: The method of embodiment 17, wherein the touch screen is coupled to the gesture engine and the view engine through the Internet.
Embodiment 19: The method of embodiment 15, wherein the command is selected from a group of commands comprising: on, off, automatic control, manual control, zoom, shrink, rotate, translate, move, open, close, scale, transform, activate, deactivate, and delete.
Embodiment 20: The method of embodiment 15, wherein the first object is a graphical representation of a control for a machine, and the gesture is used to automatically control the machine.

## Claims

1. A method of operating a human-machine interface system, the method comprising:
displaying a plurality of objects on a display system (200), each of the plurality of objects displayed according to object parameters (200);
receiving touch information corresponding to a plurality of touches on the display system (202);
processing the touch information to identify which object of the plurality of objects was touched (204);
upon identifying the first object that was touched, processing the touch information to identify a first gesture represented by the plurality of touches (206);
upon identifying the first gesture, determining a first command based on the first gesture (208);
generating first new parameters for the object based on the first command (210); and
displaying at least the first object that was touched according to the first new parameters for the object (212).

2. The method of claim 1, wherein the first command is selected from a group of commands comprising: on, off, automatic control, manual control, zoom, shrink, rotate, translate, move, open, close, scale, transform, activate, deactivate, and delete.

3. The method of claim 1 or 2, wherein the first object is a graphical representation of a control for a machine (102), and the first gesture is used to automatically control the machine (102).

4. The method of any one of claims 1 to 3, further comprising:
receiving second touch information corresponding to a second plurality of touches on the display system;
processing the second touch information to identify a second object of the plurality of objects that was touched;
if the second object touched is the same as the first object touched:
processing the second touch information to identify a second gesture represented by the second plurality of touches;
upon identifying the second gesture, processing the second gesture to determine a second command;
generating second new parameters for the object based on the second command,
and incorporating the first new parameters for the object; and
displaying at least the first object that was touched according to the second new parameters for the object.

5. A processing device (400) for the operation of a touch screen (402) displaying a plurality of objects, each of the plurality of objects displayed according to object parameters, comprising:
a gesture engine (404) coupled to the touch screen (402), configured to receive user inputs and determine a set of points touched based on the user inputs;
a view engine (406) coupled to the touch screen (402) and the gesture engine (404), configured to receive a set of points from the gesture engine (404) and determine an identity of an object touched from the plurality of objects based on the set of points touched; and
an object engine (408) coupled to the gesture engine (404) and the view engine (406), configured to:
receive the identity of the object touched from the view engine (406);
query the gesture engine (404) for a command based on the user inputs and the object touched;
receive a command from the gesture engine (404); and
process the object touched and the command to determine a new set of parameters for the object;
wherein the view engine (406) is also configured to receive the new set of parameters from the object engine (408), and to display the object configured by the new set of parameters on the touch screen (402).

6. The processing device of claim 5, wherein the command is selected from a group of commands comprising: on, off, automatic control, manual control, zoom, shrink, rotate, translate, move, open, close, scale, transform, activate, deactivate, and delete.

7. The processing device of claim 5, wherein the first object is a graphical representation of a control for a machine (102), and the gesture is used to automatically control the machine (102).

8. A method for the operation of a touch screen comprising:
displaying a plurality of objects on the touch screen (500), each of the plurality of objects displayed according to object parameters (500);
receiving user inputs from the touch screen at a gesture engine (502);
determining a set of points touched by the user inputs in the gesture engine (504);
processing the set of points touched in a view engine to determine an identity of an object touched from the plurality of objects (506);
receiving the identity of the object touched at an object engine, and transmitting the identity of the object touched to the gesture engine (508);
determining a gesture in the gesture engine based on the user inputs and the object touched (510);
determining a command in the gesture engine based on the gesture (510);
receiving the command at the object engine (512);
processing the command and the object touched in the object engine to determine a new set of parameters for the object (514); and
displaying the object configured by the new set of parameters on the touch screen (516).

9. The method of claim 8, wherein the command is selected from a group of commands comprising: on, off, automatic control, manual control, zoom, shrink, rotate, translate, move, open, close, scale, transform, activate, deactivate, and delete.

10. The method of claim 8, wherein the first object is a graphical representation of a control for a machine (102), and the gesture is used to automatically control the machine (102).
